# EUROPEAN PATENT APPLICATION

(11) **EP 4 845 303 A1**
(43) Date of publication of application: **25.11.2026**
(21) Application number: 25741826.9
(22) Date of filing: 07.01.2025
(51) Int. Cl.: H04W 92/20, H04W 28/16, H04W 72/27, H04W 84/12, H04W 88/08

(54) **COMMUNICATION DEVICE, COMMUNICATION METHOD, AND PROGRAM**

(30) Priority: 15.01.2024 JP 2024004116
(71) Applicant: Canon Kabushiki Kaisha, Tokyo 146-8501 (JP)
(72) Inventor: TAKADA, Tomoyuki, Tokyo 146-8501 (JP)
(74) Representative: Canon Europe Limited
(86) International application number: PCT/JP2025/000214
(87) International publication number: WO 2025/154581

(57) **Abstract**

A communication apparatus functioning as an access point of the IEEE 802.11 standard generates a predetermined frame including information indicating a period scheduled to perform a coordinated operation with another communication apparatus functioning as an access point based on a timing to transmit a Beacon frame by the communication apparatus as a reference, and performs communication coordinately with the other communication apparatus in the period by transmitting the predetermined frame including the information to the other communication apparatus.

## Description

### TECHNICAL FIELD

The present invention relates to a coordinated communication technique by a plurality of access points.

### BACKGROUND ART

As a communication standard associated with wireless LAN (Local Area Network), the IEEE (Institute of Electrical and Electronics Engineers) 802.11 series standard is known. The IEEE 802.11 series standard includes standards such as IEEE 802.11a/b/g/n/ac/ax/be/bn. For the IEEE 802.11be standard or a successor standard thereof, introduction of a technique for improving communication efficiency or throughput by making a plurality of access points (to be sometimes referred to as "AP" hereinafter) coordinately operate has been examined (see NPL 1).

### CITATION LIST

### NON PATENT LITERATURE

NPL 1: IEEE 802.11-23/1461r1, Considerations on Multi-AP Operation

### SUMMARY OF INVENTION

### TECHNICAL PROBLEM

When a plurality of APs perform communication by a coordinated operation, the plurality of APs need to share information of the period to perform the coordinated operation.

### SOLUTION TO PROBLEM

The present invention provides a technique of appropriately sharing information of a period to perform a coordinated operation between a plurality of access points.

According to an aspect of the present invention, there is provided a communication apparatus functioning as an access point of the IEEE 802.11 standard, comprising generation means for generating a predetermined frame including information expressing a period scheduled to perform a coordinated operation with another communication apparatus functioning as an access point based on a timing to transmit a Beacon frame by the communication apparatus as a reference, and communication means for performing communication coordinately with the other access point in the period by transmitting the predetermined frame including the information to the other access point.

### ADVANTAGEOUS EFFECTS OF INVENTION

According to the present invention, it is possible to appropriately share information of a period to perform a coordinated operation between a plurality of access points.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a wireless communication system;
Fig. 2 is a view showing an example of the hardware configuration of an AP;
Fig. 3 is a view showing an example of the functional configuration of the AP;
Fig. 4 is a view showing an example of a coordinated operation by a plurality of APs;
Fig. 5 is a view showing an example of an operation in a coordinated operation request phase;
Fig. 6 is a view showing an example of an information element indicating a period in which the plurality of APs perform the coordinated operation;
Fig. 7 is a view showing an example of an operation in a coordinated operation phase;
Fig. 8 is a view showing an example of the procedure of processing executed by an AP;
Fig. 9 is a view showing an example of the procedure of processing executed by a Sharing AP;
Fig. 10 is a view showing an example of the procedure of processing executed by a Shared AP; and
Fig. 11 is a view showing an example of the procedure of processing executed by an STA.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (Configuration of Wireless Communication System)

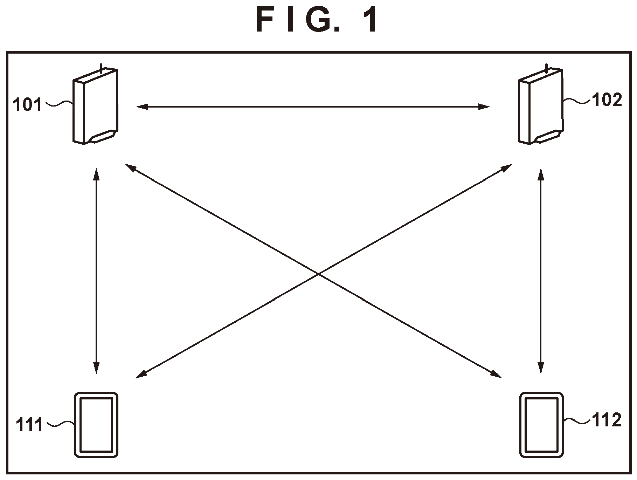

Fig. 1 shows an example of configuration of a wireless communication system according to this embodiment. In an example, the wireless communication system is configured to perform wireless communication by a wireless local area network (wireless LAN) complying with the IEEE 802.11bn standard. Note that IEEE is short for Institute of Electrical and Electronics Engineers. A description will be made below assuming a wireless LAN complying with the IEEE 802.11bn standard. However, the present invention is not limited to this, and a method to be described below may be applied to communication complying with another wireless communication standard. For example, in communication complying with one of the successor standards of the IEEE 802.11be standard, a method to be described below can be applied. Also, in a communication standard other than wireless LAN, the following method may be applied. In the example shown in Fig. 1, as communication apparatuses for performing wireless communication, two access points (an AP 101 and an AP 102) and two stations (an STA 111 and an STA 112) are shown. Note that an access point will be referred to as an AP, and a station will be referred to as an STA hereinafter. The example shown in Fig. 1 is merely an example, and the wireless communication system is configured such that at least two APs perform communication (coordinated communication) by sharing a transmission opportunity (TXOP). That is, the number of APs may be three or more. In addition, the number of STAs may be one or three or more. Note that the AP 101 and the AP 102, and the STA 111 and the STA 112 are configured to perform communication complying with the IEEE 802.11 series standard other than the IEEE 802.11bn standard. Hereinafter, the roles of the AP 101 and the AP 102 will distinctively be described, but the roles of the AP 101 and the AP 102 may be exchanged. The AP 101 and the AP 102 can operate in both the role of the AP 101 and the role of the AP 102 to be described later.

The AP 101 and the AP 102 each form and manage a network called a Basic Service Set (BSS). The STA 111 and the STA 112 participate in the BSS managed by one of the APs, thereby communicating with the APs forming the BSS. In an example, the STA 111 can participate in the BSS managed by the AP 101, and the STA 112 can participate in the BSS managed by the AP 102. Also, the STA 111 and the STA 112 may participate in both the BSS managed by the AP 101 and the BSS managed by the AP 102.

In addition, the AP 101 and the AP 102 or the STA 111 and the STA 112 can be configured to support wireless communication based on another communication standard such as Bluetooth^{®}, NFC, or Bluetooth^{®} LE (Low Energy). Here, NFC is short for Near Field Communication. Also, the AP 101 and the AP 102 may be configured to support wired communication using an Ethernet^{®} cable or wired communication using an optical fiber. The AP 101 and the AP 102 can each be, for example, a wireless LAN router or a personal computer (PC) but are not limited to these. The STA 111 and the STA 112 can each be, for example, a camera, a tablet, a smartphone, a PC, a portable telephone, a video camera, or a wearable device such as smartglasses but are not limited to these. The AP 101 and the AP 102 or the STA 111 and the STA 112 may each be an information processing apparatus such as a wireless chip that supports at least one of transmission and reception of a wireless frame complying with the IEEE 802.11 series standard.

In the wireless communication system according to this embodiment, communication with a coordinated operation between APs is performed to improve the use efficiency of wireless media, reduce the transmission delay, and increase the communication distance. That is, the AP 101 and the AP 102 coordinately communicate with the STA 111 or the STA 112. This communication will be referred to as AP coordinated communication hereinafter.

The AP coordinated communication includes, for example, coordinated spatial reuse (CSR). In the CSR, a plurality of APs coordinately execute communication using the function of spatial reuse in the IEEE 802.11 series standard from the IEEE 802.11ax standard onwards. Note that in the CSR, the plurality of APs can coordinately perform communication using the function of spatial reuse, for example, only during a predetermined period. In addition, the AP coordinated communication includes coordinated orthogonal frequency multiple access (OFDMA)/time division multiple access (TDMA). In the coordinated OFDMA/TDMA, for example, a plurality of APs share a plurality of Resource Units (RUs) included in one OFDM symbol or a transmission opportunity (TXOP). Also, the AP coordinated communication includes coordinated beamforming (CBF). In the CBF, a plurality of APs coordinate, thereby, for example, spatially multiplexing communication between an AP and an STA and communication between another AP and the STA. In addition, the AP coordinated communication includes joint transmission/reception (JT/JR) OFDMA/TDMA. In the JT/JR OFDMA/TDMA, a plurality of APs transmit/receive the same signal to/from one STA while executing, for example, multiple connection by OFDMA/TDMA. These coordinated operations are executed during a predetermined period decided by one of the APs.

In the AP coordinated communication, an AP operates in the role of a sharing AP that takes initiative of the coordinated communication or a shared AP that is controlled by the sharing AP. The period to execute the coordinated operation as described above can be decided by, for example, a sharing AP. Here, to perform AP coordinated communication, the sharing AP needs to notify the shared AP of the information of the period. On the other hand, each AP individually includes a timer, and the timers independently operate. Hence, there is no common time between the sharing AP and the shared AP. For this reason, when the sharing AP is to notify the shared AP of the period to perform the coordinated operation, time information or the like cannot be used. Hence, in this embodiment, based on the transmission timing of a Beacon frame periodically transmitted by an AP as a reference, information such as the information of the time difference (offset) from the timing to the timing to start coordinated communication and the period to perform the coordinated communication is shared. For example, the sharing AP notifies the shared AP of information indicating the timing at which coordinated communication is to be performed based on the time elapsed from the timing at which the self-apparatus transmits the Beacon frame and information indicating the length of the period to perform the coordinated communication. The shared AP can then specify the period scheduled to execute coordinated communication based on the information and the reception timing of the Beacon frame from the sharing AP.

Examples of the configuration of an AP that performs such processing and the procedure of processing executed by the AP will be described below.

### (Apparatus Configuration)

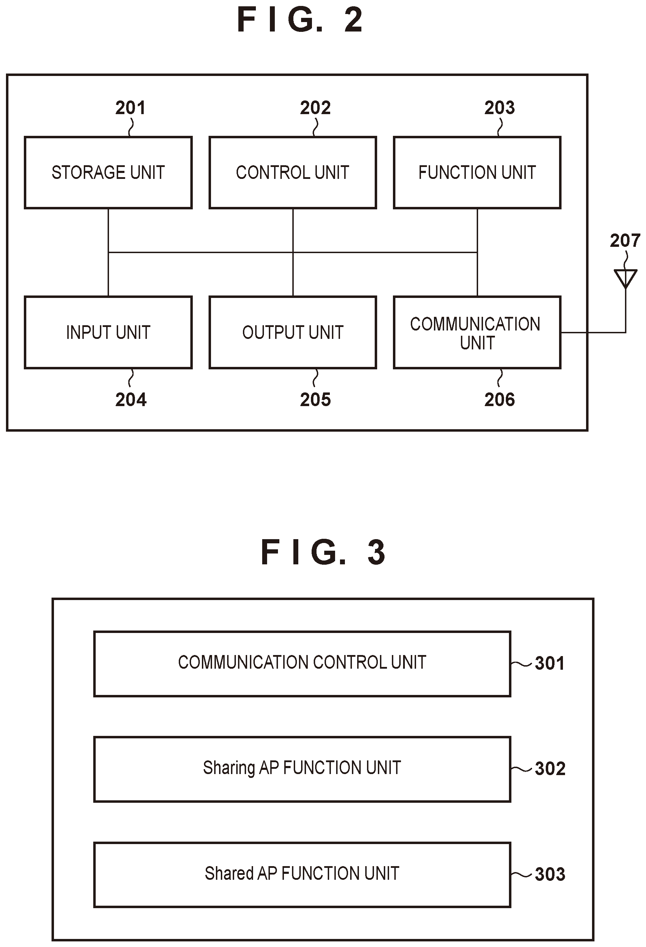

An example of the configuration of a communication apparatus (the AP 101 and the AP 102) according to this embodiment, which functions as an AP, will be described with reference to Fig. 2. Fig. 2 showing an example of the hardware configuration of the AP. As shown in Fig. 2, the AP includes, as its hardware configuration, for example, a storage unit 201, a control unit 202, a function unit 203, an input unit 204, an output unit 205, a communication unit 206, and an antenna 207.

The storage unit 201 is configured to include one or more memories such as a ROM and a RAM, and stores computer programs configured to perform various kinds of operations to be described later and various kinds of information such as communication parameters for wireless communication. Note that ROM is short for Read Only Memory and RAM is short for Random Access Memory. Note that in addition to or in place of the memory such as a ROM or a RAM, the storage unit 201 may include a storage medium such as a flexible disk, a hard disk, an optical disk, a magnetooptical disk, a CD-ROM, a CD-R, a magnetic tape, a nonvolatile memory card, or a DVD. The storage unit 201 may include Solid State Drive (SSD). Also, the storage unit 201 may include a plurality of memories.

The control unit 202 is formed by one or more processors such as a CPU and an MPU, and controls the whole AP by executing, for example, computer programs stored in the storage unit 201. Note that CPU is short for Central Processing Unit, and MPU is short for Micro Processing Unit. The control unit 202 can be configured to execute processing of generating data or signals to be transmitted in communication with another communication apparatus (another AP or STA) in addition to control of the whole AP. Note that the control unit 202 may be configured to, for example, execute processing such as control of the whole AP by cooperation of computer programs and an OS (Operating System) stored in the storage unit 201. In addition, the control unit 202 may include a plurality of processors such as a multi-core processor, and execute processing such as control of the whole AP by the plurality of processors. Also, the control unit 202 may be formed from an ASIC (Application-Specific Integrated Circuit), a DSP (Digital Signal Processor), an FPGA (Field Programmable Gate Array), or the like.

In addition, the control unit 202 controls the function unit 203 to execute predetermined processing such as image capturing, printing, or projection. The function unit 203 is hardware used by the AP to execute predetermined processing. For example, if the AP is a camera such as a digital still camera or a smartphone with a camera, the function unit 203 is an image capturing unit and performs processing of capturing an image of the periphery. Also, for example, if the AP is a printer, the function unit 203 is a print unit and performs print processing on a sheet such as paper based on, for example, print data stored in the storage unit 201 or acquired from the outside or via wireless communication. Also, for example, if the AP is a projector or smartglasses, the function unit 203 is a projection unit and performs projection processing of, for example, image data or video data stored in the storage unit 201 or acquired from the outside or via wireless communication. In a case of smartglasses, the projection surface is the retina of an end user, or the like. Data to be processed by the function unit 203 may be data stored in the storage unit 201, or may be data communicated with another AP or STA via the communication unit 206 to be described later. Furthermore, the AP can provide a network storage function such as an NAS (Network Attached Storage). This function is provided as a web service such as a network storage service to another communication apparatus. For example, another communication apparatus such as an STA is connected to a network storage service provided by the AP 101 and the AP 102 using a protocol such as SMB, FTP, or WebDAV. The other communication apparatus such as an STA can upload a file to the storage service or download a file in the storage. Data communication for upload or download at this time can be performed using, for example, a wireless communication function complying with the IEEE 802.11 series standard or the like.

The input unit 204 accepts various kinds of operations from the user. The output unit 205 performs various kinds of outputs to the user. Here, the output by the output unit 205 includes, for example, at least one of display on a screen, audio output by a speaker, and vibration output. Note that both the input unit 204 and the output unit 205 may be implemented by one module, like a touch panel. Also, each of the input unit 204 and the output unit 205 may be incorporated in the AP, or may be configured as an external apparatus connected to the AP.

The communication unit 206 controls wireless communication complying with the IEEE 802.11 series standard or controls Internet Protocol (IP) communication. The communication unit 206 executes transmission/reception of a wireless frame of the IEEE 802.11 standard in cooperation with, for example, the antenna 207. The antenna 207 is an antenna capable of transmitting/receiving a signal in at least one of frequency bands of, for example, the sub-GHz band, the 2.4-GHz band, the 5-GHz band, the 6-GHz band, the 7-GHz band, and the 60-GHz band. In this embodiment, one antenna 207 is shown. However, a plurality of antennas may be prepared. In an example, a different antenna may be prepared for each frequency band. Also, if the AP includes a plurality of antennas, a plurality of communication units 206 corresponding to the plurality of antennas may be provided. Note that if the AP supports the NFC standard or Bluetooth^{®} standard, a communication unit 206 configured to control wireless communication complying with the communication standard can be prepared.

Fig. 3 shows an example of the functional configuration of the AP. The AP includes, at its functional configuration, a communication control unit 301, a Sharing AP function unit 302, and a Shared AP function unit 303. These functions can be implemented by, for example, executing programs stored in the storage unit 201 by the control unit 202 or by a processing function unit in the communication unit 206. Note that Fig. 3 is a view for explaining main functions according to this embodiment, and other functions are omitted. Hence, the AP can have, for example, control functions as a normal AP for establishment of connection or communication and functions generally provided in a communication apparatus, as a matter of course. Also, a plurality of function blocks in Fig. 3 may be integrated into one function block, or one function block may be divided into a plurality of function blocks.

The communication control unit 301 executes communication control for performing wireless communication complying with the IEEE 802.11 series standard such as the IEEE 802.11bn standard. For example, the communication control unit 301 executes control for generation and transmission of a wireless frame, for example, a control frame such as a Beacon frame or a data frame to be transmitted to a communication partner apparatus, reception of a wireless frame transmitted from another AP, decoding, or the like. Note that in addition to connection and communication with an STA, the communication control unit 301 controls inter-AP communication with another AP. The Sharing AP function unit 302 executes communication control as a sharing AP. The Sharing AP function unit 302, for example, decides a period to perform AP coordinated communication. The Sharing AP function unit 302 then generates information expressing the specified period based on a Beacon frame transmission timing as a reference, and transmits the information, via the communication control unit 301, to another AP that operates as a shared AP in AP coordinated communication. In addition, the Sharing AP function unit 302 executes various kinds of control associated with AP coordinated communication, such as trigger frame transmission for data transmission by coordinated communication to another AP that operates as a shared AP. The Shared AP function unit 303 executes communication control as a shared AP. For example, in AP coordinated communication, the Shared AP function unit 303 acquires, from another AP functioning as a sharing AP, the information indicating the period to execute coordinated communication based on the Beacon frame transmission timing as a reference, and specifies the period. The Shared AP function unit 303 then performs communication during the period coordinately with another AP functioning as a sharing AP. For example, the Shared AP function unit 303 can receive a trigger frame transmitted from the sharing AP and transmit a data frame to the STA using the information in the trigger frame.

Note that the STA has a hardware configuration and a functional configuration of a normal STA, and a detailed description thereof will be omitted here.

### (Procedure of Communication)

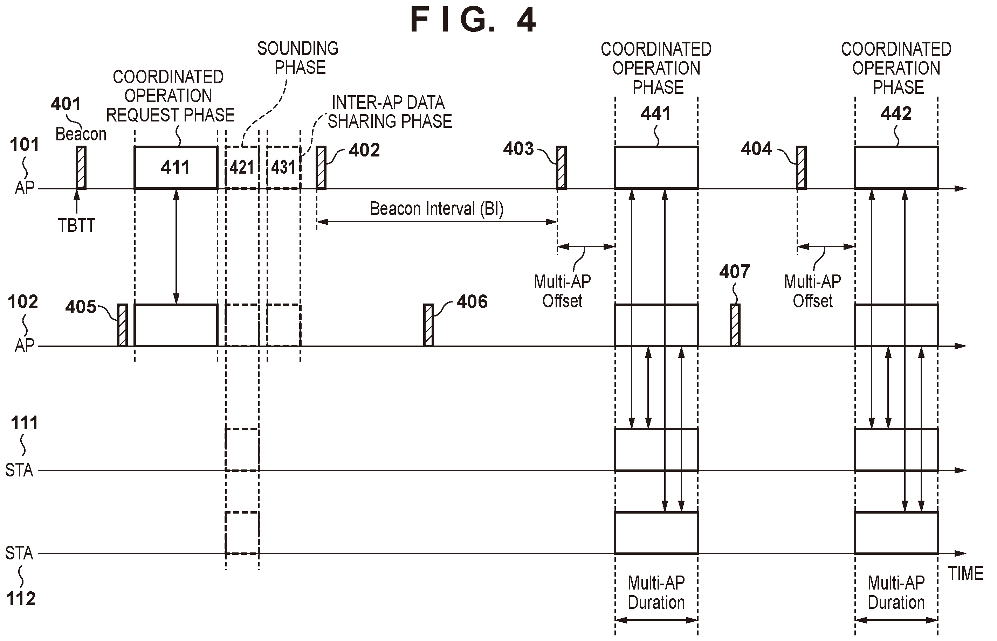

A procedure of AP coordinated communication according to this embodiment will be described. Fig. 4 shows an example of the procedure of communication processing in a case where the AP 101 and the AP 102 shown in Fig. 1 coordinately transmit a data frame to the STA 111 and the STA 112. Note that in a case where three or more APs coordinately perform communication, one AP functions as a sharing AP, and the remaining (two or more) APs each function as a shared AP. As in processing to be described later, the shared AP specifies the period to perform coordinated communication based on information from the sharing AP, and AP coordinated communication is performed in the period.

The AP 101 and the AP 102 each start transmitting a Beacon frame when the wireless communication function by the wireless LAN is set to be enabled. The AP 101 and the AP 102 each periodically transmit a Beacon frame at a timing called Target Beacon Transmission Time (TBTT). Note that the transmission cycle (Beacon Interval (BI)) of the Beacon frame in each AP can individually be set. After the elapse of BI from transmission of a Beacon frame 401, the AP 101 transmits a next Beacon frame 402. Similarly, a Beacon frame 403 is transmitted after the elapse of BI from the transmission of the Beacon frame 402, and a Beacon frame 404 is transmitted after the elapse of BI from the transmission of the Beacon frame 403. Also, in an example, the AP 102 transmits Beacon frames at timings (TBTT) and BI different from those of the AP 101. The AP 102 transmits a Beacon frame 406 after the elapse of BI from transmission of a Beacon frame 405, and transmits a Beacon frame 407 after the elapse of BI from the transmission of the Beacon frame 406.

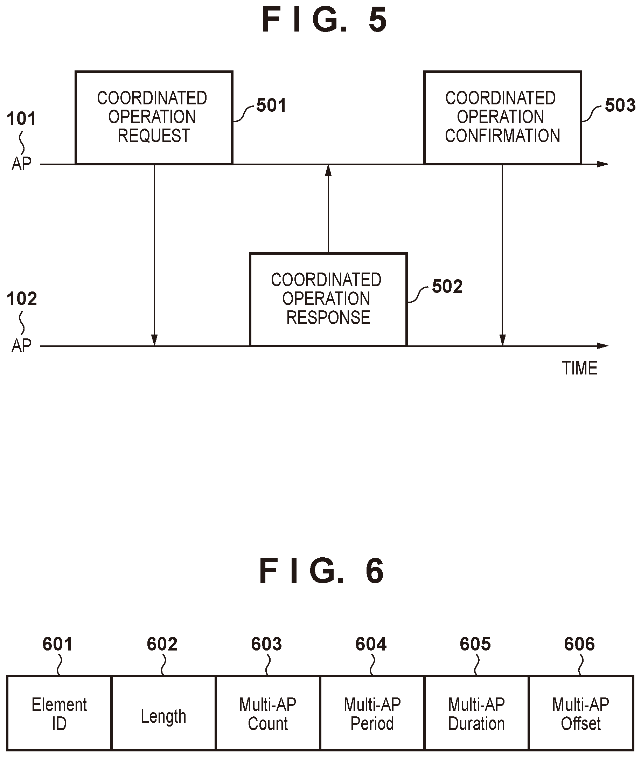

Here, when it is decided to perform AP coordinated communication with the AP 102, the AP 101 starts a coordinated operation request phase 411. An example of the procedure of processing of the coordinated operation request phase 411 will be described here with reference to Fig. 5. In the coordinated operation request phase 411, the AP 101 transmits a coordinated operation request frame 501 to the AP 102. The coordinated operation request frame 501 includes information indicating a request to the AP 102 to perform a coordinated operation with the AP 101, the type of the coordinated operation, and a period scheduled to perform the coordinated operation. Fig. 6 shows an example of the configuration of an information element indicating the period scheduled to perform the coordinated operation. As shown in Fig. 6, the information element can be described in the format of Information Element (IE) defined by the IEEE 802.11 standard. Note that this is merely an example, and the information element configured to designate the period scheduled to perform the coordinated operation may be described in another format. In the example shown in Fig. 6, the information element includes an Element ID 601 and a Length 602. The information element also includes a Multi-AP Count 603, a Multi-AP Period 604, a Multi-AP Duration 605, and a Multi-AP Offset 606.

The Element ID 601 is a field indicating the identifier of the IE. The Length 602 is a field indicating the length of the IE. The Multi-AP Count 603 is a field indicating the number of TBTTs of the AP 101, which exist from the transmission of the coordinated operation request frame 501 to the start of the period scheduled to perform the coordinated operation. That is, the Multi-AP Count 603 is information indicating the number of times of Beacon frame transmission from the transmission of the coordinated operation request frame 501 to the start of the period to perform the first coordinated operation. In the example shown in Fig. 4, the Beacon frame 402 and the Beacon frame 403 are transmitted between the coordinated operation request phase 411 to transmit the coordinated operation request frame 501 and a first coordinated operation phase 441 to actually perform the coordinated operation. That is, the number of times of Beacon frame transmission from the transmission of the coordinated operation request frame 501 to the period to perform the coordinated operation (coordinated operation phase 441) is 2 (two TBTTs exist). For this reason, in this case, a value "2" is stored in the Multi-AP Count 603. Note that this is merely an example and, for example, it may be indicated by a value "n-1" that the number of times of Beacon frame transmission from the transmission of the coordinated operation request frame to the period to perform the coordinated operation is "n". This is because if no Beacon frame is transmitted after the transmission of the coordinated operation request frame, the period of the coordinated operation based on the timing of a Beacon frame as a reference cannot be specified and "0 times" need not be expressed. The Multi-AP Period 604 is a field indicating whether to periodically repeat the period scheduled to perform the coordinated operation and the number of periods to set. For example, if a value "0" is stored in this field, it indicates that the period scheduled to perform the coordinated operation is set only once after the transmission of the coordinated operation request frame 501. For example, in the example shown in Fig. 4, if only the coordinated operation phase 441 is set and a coordinated operation phase 442 is not set, the value "0" is stored in the Multi-AP Period 604. If a non-zero value is stored in this field, the number of times of setting the period scheduled to perform the coordinated operation is specified by the value. Note that the period scheduled to perform the coordinated operation is set in the time interval (BI) sandwiched between two Beacon frames. Hence, the number of times of setting the period scheduled to perform the coordinated operation can be designated by the number of BIs from the transmission of the coordinated operation request frame 501 to completion of the coordinated operation. In the example shown in Fig. 4, since two periods including the coordinated operation phase 441 and the coordinated operation phase 442 are set in two BIs, "1" is stored in the Multi-AP Period 604. If a non-zero value is stored in this field, it indicates that the period to perform the coordinated operation periodically arrives, and the cycle may be indicated by the non-zero value. Here, the cycle may be expressed using the length of the BI as a unit. For example, if the period to perform the coordinated operation exists in all BIs, a value "1" can be stored because the cycle corresponds to the length of one BI. Also, if the period to perform the coordinated operation occurs every other BI, a value "2" can be stored because the cycle corresponds to the length of two BIs. If a non-zero value is stored in this field, the value may indicate both the number of times of setting the period scheduled to perform the coordinated operation and the cycle. In this case, this field may be formed by two or more subfields including a subfield indicating the number of times of setting the period scheduled to perform the coordinated operation and a subfield indicating the cycle. The Multi-AP Duration 605 is a field indicating the length of the period scheduled to perform the coordinated operation. The Multi-AP Offset 606 is a field indicating the time difference (offset) between the timing to start the period scheduled to perform the coordinated operation and the TBTT of the AP 101 immediately before the period. That is, in the example shown in Fig. 4, the time difference from the transmission timing (TBTT) of the Beacon frame 403 immediately before the coordinated operation phase 441 is stored in the Multi-AP Offset 606. Similarly, the coordinated operation phase 442 is started at a timing after the elapse of time corresponding to the offset stored in the Multi-AP Offset 606 from the Beacon frame 404. That is, if a non-zero value is stored in the Multi-AP Period 604, the period to perform the coordinated operation can be set at the same cycle as the Beacon frame transmission cycle or a cycle of integer multiple thereof. Note that this is merely an example, and the cycle to set a plurality of periods may be set independently of the cycle of the Beacon frame.

Referring back to Fig. 5, upon receiving the coordinated operation request frame 501, as a response to the frame, the AP 102 transmits a coordinated operation response frame 502 to the AP 101. The coordinated operation response frame 502 includes information indicating whether to accept the coordinated operation indicated by the coordinated operation request frame 501. Also, the coordinated operation response frame 502 may include information for proposing the type and period of the coordinated operation, like the coordinated operation request frame 501. In this case, the coordinated operation response frame 502 can include information explicitly indicating that the type and period of the coordinated operation are proposed. Alternatively, the coordinated operation response frame 502 may include information for refusing the request by the coordinated operation request frame 501. That is, acceptance or proposal of the type and period of the coordinated operation may not be performed. Note that the coordinated operation response frame 502 indicating acceptance of the coordinated operation may be a frame indicating the same type and period as the type and period of the coordinated operation indicated by the coordinated operation request frame 501. In this case, the coordinated operation response frame 502 including information different from the information indicated by the coordinated operation request frame 501 can be handled as a frame for proposing the type and period of the coordinated operation by the information. That is, the coordinated operation response frame 502 may not include explicit information indicating proposal of the type and period of the coordinated operation. Also, in this case, the coordinated operation response frame 502 may indicate refusal of the request of the coordinated operation by including a predetermined value as the type and period of the coordinated operation.

Upon receiving the coordinated operation response frame 502 not indicating that the coordinated operation is refused, the AP 101 transmits a coordinated operation confirmation frame 503 to the AP 102. The coordinated operation confirmation frame 503 can include information indicating that, for example, the coordinated operation response frame 502 is normally received and the coordinated operation is to be performed. Also, if the coordinated operation response frame 502 includes a proposal concerning the coordinated operation, the coordinated operation confirmation frame 503 can include information indicating whether to accept the proposal. Here, the coordinated operation confirmation frame 503 including information indicating that the proposal is not accepted can implicitly indicate that the coordinated operation is not to be performed. When accepting the proposal, the coordinated operation confirmation frame 503 may include information explicitly indicating the acceptance of the proposal, and may include, in place of or in addition to the information, the same information as the type and period of the coordinated operation proposed by the coordinated operation response frame 502. Note that if the coordinated operation response frame 502 indicating the acceptance of the coordinated operation is received, information indicating the acceptance of the coordinated operation may be included in the coordinated operation confirmation frame 503 to indicate that coordinated communication with the contents of the coordinated operation request frame 501 is to be performed.

If the AP 102 receives the coordinated operation confirmation frame 503 indicating the acceptance of the coordinated operation, the AP 101 and the AP 102 agree to the coordinated operation. Note that the AP 101 may recognize, by receiving an Acknowledgement (ACK) frame (not shown) transmitted from the AP 102, that the coordinated operation confirmation frame 503 is received by the AP 102.

As shown in Fig. 5, in the coordinated operation request phase 411, the AP 101 requests the coordinated operation from the AP 102 and performs negotiation with the AP 102. If the AP 101 and the AP 102 agree to the coordinated operation by transmitting/receiving the above-described frames or if one of the APs does not agree to the coordinated operation and refuses the coordinated operation, the coordinated operation request phase 411 ends. Note that in this embodiment, the AP (AP 101) that starts the coordinated operation request phase 411 is called a sharing AP, and the AP (AP 102) that responds to the request from the sharing AP is called a shared AP.

Referring back to Fig. 4, if the AP 101 and the AP 102 agree to the coordinated operation, the phase transitions to a sounding phase 421. In the sounding phase 421, a necessary sounding procedure between the communication apparatuses is executed in accordance with the type of the coordinated operation. As a result, a transfer function associated with radio wave propagation between the communication apparatuses, which is necessary for the coordinated operation, is specified. For example, the AP 101 and the AP 102 can specify the transfer function associated with radio wave propagation with respect to the STA 111 and the STA 112. Note that the sounding phase 421 can be executed only in a case where execution of the sounding procedure is necessary in accordance with the type of the coordinated operation.

If the sounding phase 421 ends, the phase transitions to an inter-AP data sharing phase 431. In the inter-AP data sharing phase 431, if a coordinated operation that needs data sharing is performed between the AP 101 and the AP 102, data sharing between the APs is performed. For example, when executing joint transmission/reception (JT/JR) OFDMA/TDMA, the AP 101 and the AP 102 execute data sharing. Note that the inter-AP data sharing phase 431 can be executed only in a case where execution of data sharing is necessary in accordance with the type of the coordinated operation.

If the inter-AP data sharing phase 431 ends, the coordinated operation phase 441 is started in the period agreed in the coordinated operation request phase 411. The coordinated operation phase may be periodically repeated. Fig. 4 shows an example in which next to the coordinated operation phase 441, the coordinated operation phase 442 is repetitively set as the second coordinated operation phase. In the coordinated operation phase, the coordinated operation is executed with the contents agreed in the coordinated operation request phase 411.

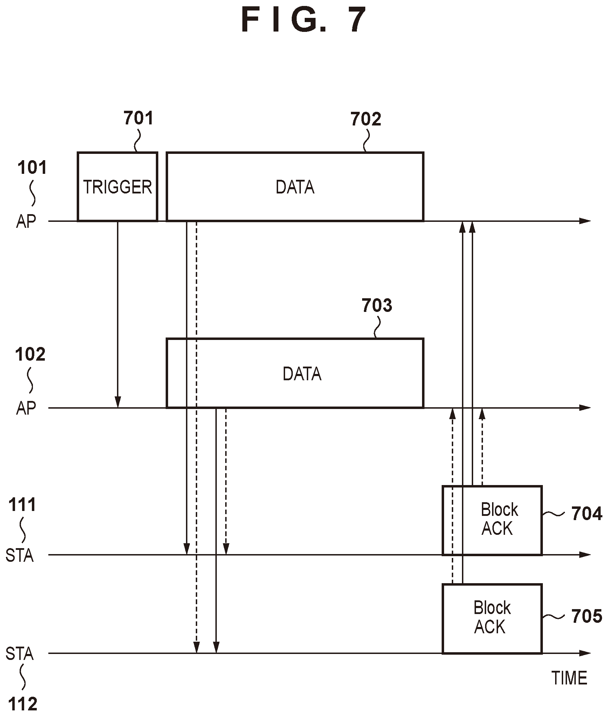

An example of the procedure of processing executed in the coordinated operation phase 441 and the coordinated operation phase 442 will be described here with reference to Fig. 7. When the coordinated operation phase is started, the AP 101 transmits a trigger frame 701 to the AP 102. After that, the AP 101 transmits a data frame 702 to at least one of the STA 111 and the STA 112. Upon receiving the trigger frame 701 from the AP 101, the AP 102 transmits a data frame 703 to at least one of the STA 111 and the STA 112. The transmission of the data frame 702 and the data frame 703 is executed using the coordinated operation of the type agreed in the coordinated operation request phase 411. Upon receiving the data frame 702, the STA 111 transmits an ACK frame 704 (a Block ACK frame in Fig. 5) to the AP 101. Also, upon receiving the data frame 703, the STA 111 transmits an ACK frame 705 to the AP 102. Similarly, upon receiving at least one of the data frame 702 and the data frame 703, the STA 112 transmits an ACK frame 705 (a Block ACK frame in Fig. 5) to the AP that is the transmission source of the data frame.

Note that except the ACK frame 704 and the ACK frame 705, an ACK frame indicating that a frame is received is not illustrated in Figs. 5 and 7. However, if a frame is received, any communication apparatus can subsequently transmit an ACK frame to the communication apparatus that is the transmission source of the frame.

### (Operation of AP)

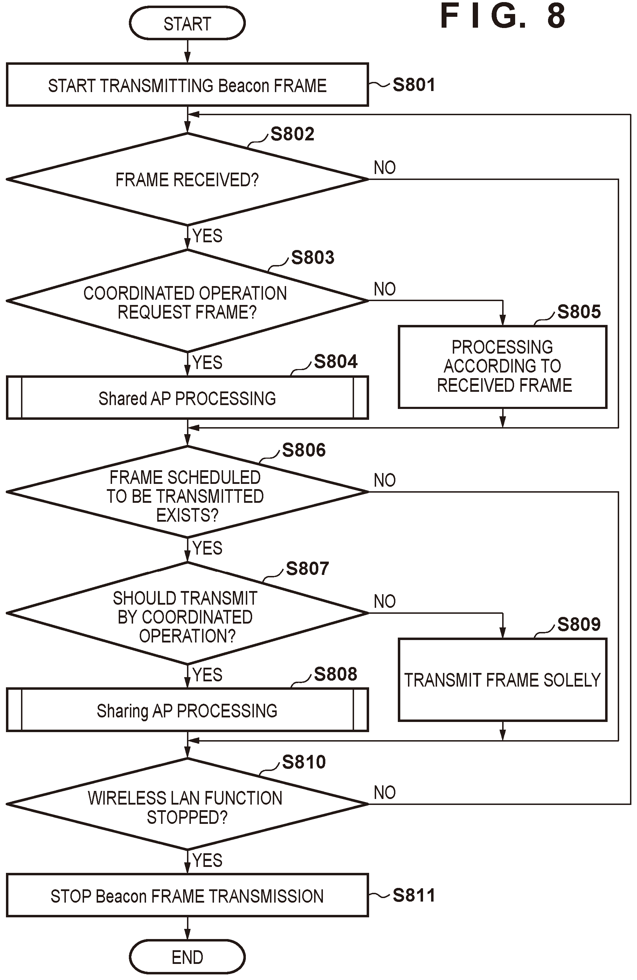

Fig. 8 is a view showing an example of the procedure of processing executed by a communication apparatus (the AP 101 or the AP 102) functioning as an AP. The processing shown in Fig. 8 is started when the wireless LAN function of the communication apparatus is started (enabled) by, for example, powering on the communication apparatus or inputting, by the user, information to the communication apparatus via the input unit 204. Note that the order of processing steps to be described later may be changed or a plurality of processing steps may be executed in parallel. In addition, some processing steps may be omitted or may be replaced with different processing steps of the same purpose.

The AP starts transmitting a Beacon frame (step S801). Here, the transmission cycle of the Beacon frame is decided based on information input to the input unit 204 by the user or information stored in the storage unit 201 in advance. The AP then determines whether a certain wireless frame is received (step S802). If a certain wireless frame is received (YES in step S802), the AP advances the process to step S803. If no wireless frame is received (NO in step S802), the AP advances the process to step S806.

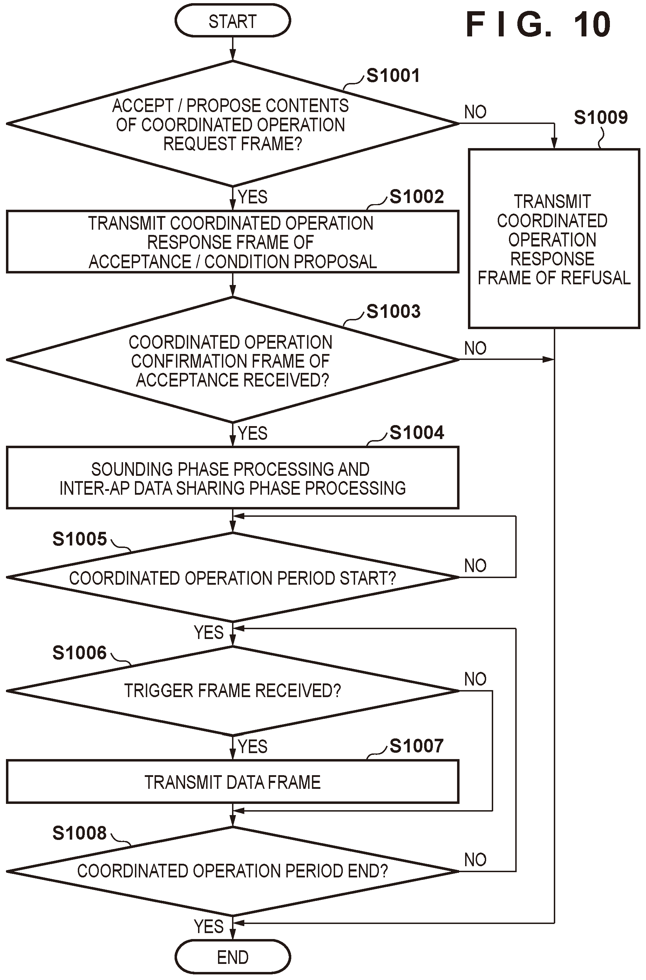

In step S803, the AP determines whether the received wireless frame is a coordinated operation request frame. If a coordinated operation request frame is received (YES in step S803), the AP executes shared AP processing to be described later with reference to Fig. 10 (step S804). On the other hand, if a wireless frame that is not a coordinated operation request frame is received (NO in step S803), the AP executes processing according to the received wireless frame (step S805). After execution of the processing of step S804 or S805, the AP advances the process to step S806.

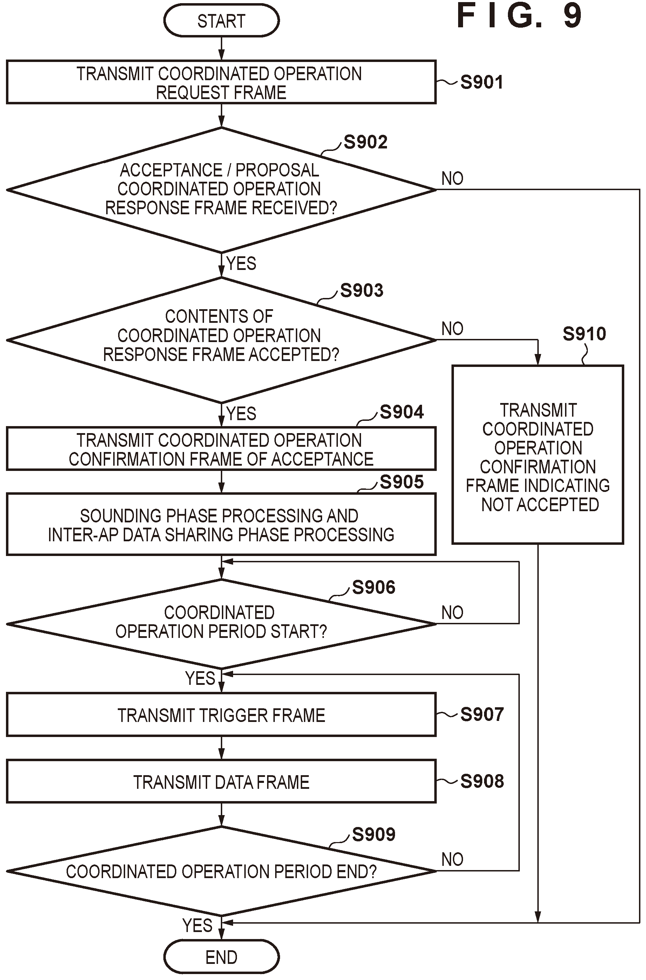

In step S806, the AP determines whether there is a wireless frame scheduled to be transmitted. For example, the AP confirms whether a wireless frame scheduled to be transmitted exists in one of the storage unit 201, the control unit 202, the function unit 203, the input unit 204, and the communication unit 206. Upon determining that there is a wireless frame scheduled to be transmitted (YES in step S806), the AP advances the process to step S807. Upon determining that such a wireless frame does not exist (NO in step S806), the AP advances the process to step S810. In step S807, the AP determines whether to use a coordinated operation with another AP to transmit the wireless frame scheduled to be transmitted. Upon determining to transmit the wireless frame using the coordinated operation (YES in step S807), the AP executes sharing AP processing to be described later with reference to Fig. 9 (step S808). On the other hand, upon determining to transmit the wireless frame without using the coordinated operation (NO in step S807), the AP transmits the wireless frame solely without coordination with another AP (step S809). After execution of the processing of step S808 or S809, the AP advances the process to step S810. Note that in step S807, the AP can determine whether to use the coordinated operation to transmit the wireless frame based on, for example, the congestion state of wireless media, the attribute of the data to be transmitted, the distance to the STA that is the frame transmission destination, and the like. For example, if performing AP coordinated communication benefits the wireless medium use efficiency, transmission delay, communication distance, or the like, the AP can determine to transmit the wireless frame using the AP coordinated communication.

In step S810, the AP determines whether the wireless LAN function is stopped (disabled) by, for example, inputting, by the user, information to the input unit 204. Upon determining that the wireless LAN function is disabled (YES in step S810), the AP stops Beacon frame transmission (step S811) and ends the processing. On the other hand, upon determining that the wireless LAN function is not disabled (NO in step S810), the AP returns the process to step S802.

An example of the procedure of sharing AP processing executed in step S808 will be described next with reference to Fig. 9.

The AP starts an operation as a sharing AP and transmits a coordinated operation request frame to another AP scheduled to function as a shared AP (step S901). The coordinated operation request frame includes information of the type of the coordinated operation and the period scheduled to perform the coordinated operation. The AP determines whether a coordinated operation response frame including information indicating that contents such as the type and period of the coordinated operation indicated by the coordinated operation request frame are accepted or including a proposal of the type and period of the coordinated operation is received from the shared AP (step S902). If no coordinated operation response frame is received or if a coordinated operation response frame including nether the acceptance nor the proposal of the type and period of the coordinated operation is received (NO in step S902), the AP ends the processing without performing the coordinated operation. Note that if the processing is ended without performing the coordinated operation, the AP can advance the process to step S809 in Fig. 8 and transmit a wireless frame solely. Also, if a coordinated operation response frame including the acceptance or proposal of the type and period of the coordinated operation is not received, the AP may return the process to step S901 and repetitively transmit the coordinated operation request frame.

Upon receiving the coordinated operation response frame including the acceptance or proposal of the type and period of the coordinated operation (YES in step S902), the AP determines whether to accept the coordinated operation with the contents indicated by the coordinated operation response frame (step S903). For example, if the coordinated operation response frame indicating that the type and period of the coordinated operation proposed by the coordinated operation request frame are accepted is received, the AP determines to accept the coordinated operation with the contents. Also, for example, if the coordinated operation response frame including the proposal of the type and period of the coordinated operation is received, the AP determines whether to accept the proposal. The AP can determine whether to accept the proposal based on, for example, the congestion state of wireless media, the attribute of the data to be transmitted, the distance to the STA that is the frame transmission destination, and the like. For example, upon determining that an advantageous effect such as improvement of the use efficiency of wireless media, shortening of the transmission delay, or shortening of the communication distance can be obtained by accepting the proposal, the AP can determine to accept the proposal. Note that, for example, if it is possible to meet a condition (for example, required radio quality or required delay) required in data transmission by the contents of the proposal, the AP may determine to accept the proposal even if communication under conditions more advantageous than the proposal is possible.

Upon determining not to accept the contents of the coordinated operation response frame (NO in step S903), the AP transmits, to the shared AP, a coordinated operation confirmation frame indicating that the contents indicated by the coordinated operation response frame are not accepted (step S910), and ends the processing without performing the coordinated operation. Note that if the processing is ended without performing the coordinated operation, the AP can advance the process to step S809 in Fig. 8 and transmit a wireless frame solely. Also, if a coordinated operation response frame including the acceptance or proposal of the type and period of the coordinated operation is not received, the AP may return the process to step S901 and repetitively transmit the coordinated operation request frame.

Upon determining to accept the contents of the coordinated operation response frame (YES in step S903), the AP transmits, to the shared AP, a coordinated operation confirmation frame indicating that the contents indicated by the coordinated operation response frame are accepted (step S904). The AP then executes the processing of the sounding phase and the processing of the inter-AP data sharing phase if, for example, it is determined that these are necessary in accordance with the type of the coordinated communication (step S905). The AP waits for the start of the coordinated operation period (YES in step S906), and after the period is started, transmits a trigger frame to the shared AP to cause it to transmit a data frame (step S907). The AP then transmits a data frame coordinately with the shared AP (step S908). While the coordinated operation period continues (NO in step S909), the AP repetitively executes the processes of steps S907 and S908 and transmits transmission target data coordinately with the shared AP. If the coordinated operation period ends (YES in step S909), the AP ends the processing shown in Fig. 9.

An example of the procedure of shared AP processing executed in step S804 will be described next with reference to Fig. 10.

First, the AP functioning as a shared AP confirms information such as the type and period of the coordinated operation included in the coordinated operation request frame determined to have been received in steps S802 and S803 of Fig. 8. The AP then determines whether to accept the type and period of the coordinated operation or propose different contents for the type and period of the coordinated operation (step S1001). If the type and period of the coordinated operation are not to be accepted and another proposal is not to be made (NO in step S1001), the AP transmits a coordinated operation response frame for refusing the coordinated operation (step S1009) and ends the processing. On the other hand, to accept or propose the type and period of the coordinated operation (YES in step S1001), the AP advances the process to step S1002. In step S1002, the AP transmits a coordinated operation response frame including information indicating that the contents such as the type and period of the coordinated operation indicated by the coordinated operation request frame are accepted or a proposal of contents different from the contents indicated by the coordinated operation request frame. The AP can decide, based on the congestion state of wireless media, the attribute of the data to be transmitted, the distance to the STA that is the frame transmission destination, and the like, whether to, for example, accept the contents such as the type and period of the coordinated operation indicated by the coordinated operation request frame or propose different contents. For example, if sufficiently excellent communication can be done with the contents indicated by the coordinated operation request frame, the AP can determine to accept coordinated communication with the contents. Also, if it is possible to propose another type or period of the coordinated operation, which enables communication under better conditions than in communication performed with the contents indicated by the coordinated operation request frame, the AP can determine to propose the contents to the sharing AP. Alternatively, if it is impossible to perform communication of sufficient quality with the contents indicated by the coordinated operation request frame and it is impossible to propose another type or period of the coordinated operation, the AP can decide to refuse the request of the coordinated operation.

After the coordinated operation response frame including information indicating that the contents such as the type and period of the coordinated operation included in the coordinated operation request frame are accepted or a proposal of different contents is transmitted, the AP waits for a coordinated operation confirmation frame from the sharing AP (step S1003). If the coordinated operation confirmation frame indicating the acceptance of the coordinated operation with the contents of the coordinated operation response frame is not received from the sharing AP (NO in step S1003), the AP directly ends the processing. On the other hand, if the coordinated operation confirmation frame indicating the acceptance of the coordinated operation with the contents of the coordinated operation response frame is received from the sharing AP (YES in step S1003), the AP advances the process to step S1004. In step S1004, the AP executes the processing of the sounding phase and the processing of the inter-AP data sharing phase if, for example, it is determined that these are necessary in accordance with the type of the coordinated communication. The AP waits for the start of the coordinated operation period (YES in step S1005), and after the period is started, waits for reception of a trigger frame from the sharing AP (step S1006). Upon receiving the trigger frame (YES in step S1006), the AP transmits a data frame coordinately with the sharing AP (step S1007). While the coordinated operation period continues (NO in step S1008), the AP transmits transmission target data coordinately with the sharing AP in accordance with the trigger frame from the sharing AP. If the coordinated operation period ends (YES in step S1008), the AP ends the processing shown in Fig. 10.

### (Operation of STA)

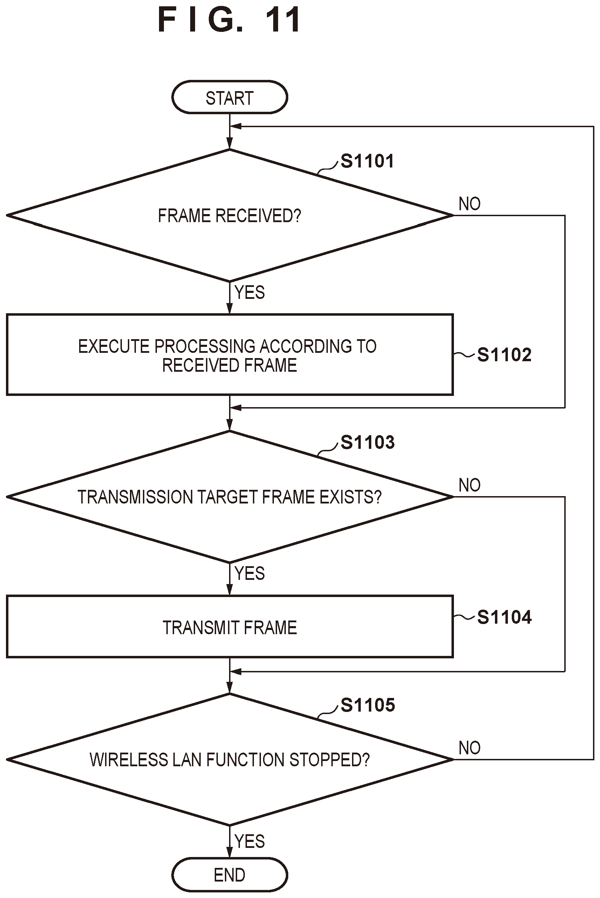

Fig. 11 is a view showing an example of the procedure of processing executed by a communication apparatus (the STA 111 or the STA 112) functioning as an STA. The processing shown in Fig. 11 is started when the wireless LAN function of the communication apparatus is started (enabled) and connected to an AP by, for example, powering on the communication apparatus functioning as the STA or inputting, by the user, information to the communication apparatus via the input unit 204. Note that the order of processing steps to be described later may be changed or a plurality of processing steps may be executed in parallel. In addition, some processing steps may be omitted or may be replaced with different processing steps of the same purpose.

Upon receiving a certain frame (YES in step S1101), the STA executes processing according to the frame (step S1102). Also, the STA determines whether a transmission target frame exists (step S1003). The STA determines whether, for example, a frame scheduled to be transmitted exists in one of the storage unit 201, the control unit 202, the function unit 203, the input unit 204, and the communication unit 206. If a transmission target frame exists, the STA transmits the frame (step S1104). The STA determines whether the wireless LAN function is stopped (disabled) by, for example, inputting, by the user, information to the input unit 204 (step S1105). Upon determining that the wireless LAN function is disabled (YES in step S1105), the STA ends the processing. On the other hand, if the wireless LAN function is not disabled (NO in step S1105), the STA returns the process to step S1101.

As described above, according to this embodiment, in an environment in which a plurality of APs perform the coordinated operation, one of the plurality of APs generates information of the period to perform the coordinated operation and transmits it to another AP based on the timing to transmit a Beacon frame as a reference. According to this, since the plurality of APs that perform the coordinated operation can receive a Beacon frame from each other even if time information common to the other APs is not held. For this reason, the period scheduled to perform the coordinated operation can be specified based on the frame as a reference. Here, the information transmitted from the AP to the other AP can include, for example, information indicating the number of TBTTs that exist before the start of the period, the time difference (offset) from the Beacon frame transmission timing (TBTT), and the length of the period. This information can also include information indicating whether the period is periodically repeated and the number and cycle of Beacon Intervals (BIs) including the period. According to these pieces of information, it is possible to flexibly express the period scheduled to perform the coordinated operation and flexibly set the period scheduled to perform the coordinated operation. Note that in the above-described example, a case where only one period scheduled to perform the coordinated operation is set for one BI has been described, but the present invention is not limited to this. For example, a plurality of periods scheduled to perform the coordinated operation may be set for one BI. In this case, the offset from the immediately preceding TBTT and the time length may be designated for each of the plurality of periods. Note that in this case, for example, in the coordinated operation request frame, for example, a plurality of IEs shown in Fig. 6 may be included, or information concerning the plurality of periods may be included in one IE. Also, in the above-described example, a case where the period scheduled to perform the coordinated operation is set for each of a plurality of continuous BIs has been described. However, for example, the period scheduled to perform the coordinated operation may be set for every predetermined number of BIs. In this case, for example, the number of TBTTs that arrive between two periods scheduled to perform the coordinated operation may be notified. For example, in a case where the coordinated operation is scheduled to be performed in every other BI, two TBTTs arrive between two periods scheduled to perform the coordinated operation, and information indicating "2" can be notified. Note that these are merely examples, and the information that designates the period scheduled to perform the coordinated operation may be expressed in another format based on the Beacon frame timing as a reference.

Note that in the above-described example, processing of deciding the type and period of coordinated communication by negotiation using a coordinated operation request frame and a coordinated operation response frame between a plurality of APs that execute AP coordinated communication has been described, but the present invention is not limited to this. For example, the sharing AP may notify the shared AP of the information of the decided period, and the shared AP may always follow the decision. Also, in the above-described example, the AP that transmits the coordinated operation request frame is the sharing AP. However, the roles of the sharing AP and the shared AP may be decided by negotiation in advance. Also, when deciding the roles, the information of the period scheduled to perform the coordinated operation may be shared in the above-described way.

Note that in the above-described example, an example in which the period to perform the coordinated operation is expressed based on the Beacon frame transmission timing as a reference has been described, but the present invention is not limited to this. For example, the start timing of the period may be designated by the time difference (offset) from the end of the coordinated operation request frame or the coordinated operation confirmation frame. In this case as well, the information indicating the length of the period can be notified, like the method using a Beacon frame as a reference. Note that the information indicating the period may be expressed using the Beacon frame in a case where the coordinated operation is repetitively periodically executed, and the information indicating the period may be expressed based on the transmission timing of the coordinated operation request frame or the like as a reference in a case where the coordinated operation is executed only once. In this case, for example, the coordinated operation request frame may include information for instructing which frame transmission timing is to be used as a reference.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2024-004116 filed January 15, 2024, which is hereby incorporated by reference herein.

## Claims

1. A communication apparatus functioning as an access point of the IEEE 802.11 standard, comprising:
generation means for generating a predetermined frame including information indicating a period scheduled to perform a coordinated operation with another communication apparatus functioning as an access point based on a timing to transmit a Beacon frame by the communication apparatus as a reference; and
communication means for performing communication coordinately with the other communication apparatus in the period by transmitting the predetermined frame including the information to the other communication apparatus.

2. The communication apparatus according to claim 1, wherein the predetermined frame is a first frame that requests the other communication apparatus to perform the coordinated operation with the communication apparatus.

3. The communication apparatus according to claim 2, wherein the communication means
receives a second frame for responding to the first frame from the other communication apparatus, the second frame including information indicating a period proposed by the other communication apparatus as a period scheduled to perform coordinated communication between the communication apparatus and the other communication apparatus based on the timing to transmit the Beacon frame by the communication apparatus as a reference, and
performs communication coordinately with the other communication apparatus in the period in a case where the period indicated by the information included in the second frame is accepted.

4. The communication apparatus according to claim 2, wherein in a case where a second frame for responding to the first frame is received from the other communication apparatus, the second frame indicating that coordinated communication with the communication apparatus in the period indicated by the first frame is accepted, the communication means performs communication coordinately with the other communication apparatus in the period.

5. A communication apparatus functioning as an access point of the IEEE 802.11 standard, comprising:
reception means for receiving, from another communication apparatus, a predetermined frame including information indicating a period scheduled to perform a coordinated operation with the communication apparatus based on a timing to transmit a Beacon frame by the other communication apparatus functioning as an access point as a reference;
specifying means for specifying the period based on the information; and
communication means for performing communication coordinately with the other communication apparatus in the period in a case where the coordinated operation with the other communication apparatus in the period is accepted.

6. The communication apparatus according to claim 5, wherein the predetermined frame is a first frame that requests, from the other communication apparatus, to request the coordinated operation between the other communication apparatus and the communication apparatus.

7. The communication apparatus according to claim 6, wherein the communication means
transmits a second frame for responding to the first frame to the other communication apparatus, the second frame including information indicating a period proposed as a period scheduled to perform coordinated communication between the communication apparatus and the other communication apparatus based on the timing to transmit the Beacon frame by the other communication apparatus as a reference, and
performs communication coordinately with the other communication apparatus in the period in a case where the period indicated by the information included in the second frame is accepted by the other communication apparatus.

8. The communication apparatus according to claim 6, wherein in a case where a second frame for responding to the first frame is transmitted to the other communication apparatus, the second frame indicating that coordinated communication with the other communication apparatus in the period indicated by the first frame is accepted, the communication means performs communication coordinately with the other communication apparatus in the period.

9. The communication apparatus according to any one of claims 1 to 8, wherein the information includes information indicating the number of times of transmission of the Beacon frame from the transmission of the predetermined frame to a start of the first period.

10. The communication apparatus according to any one of claims 1 to 9, wherein the information includes information of a time difference from Target Beacon Transmission Time (TBTT) of the Beacon frame immediately before the start of the period to a timing to start the period.

11. The communication apparatus according to any one of claims 1 to 10, wherein the information includes information indicating a length of the period.

12. The communication apparatus according to any one of claims 1 to 11, wherein the information includes information indicating whether the period is periodically repetitively set.

13. The communication apparatus according to claim 12, wherein in a case where the period is repetitively set, information indicating the number of times of setting the period is further included.

14. The communication apparatus according to claim 12 or 13, wherein in a case where the period is repetitively set, information indicating a cycle to set the period is further included.

15. A communication method executed by a communication apparatus functioning as an access point of the IEEE 802.11 standard, comprising:
generating a predetermined frame including information indicating a period scheduled to perform a coordinated operation with another communication apparatus functioning as an access point based on a timing to transmit a Beacon frame by the communication apparatus as a reference; and
performing communication coordinately with the other communication apparatus in the period by transmitting the predetermined frame including the information to the other communication apparatus.

16. A communication method executed by a communication apparatus functioning as an access point of the IEEE 802.11 standard, comprising:
receiving, from another communication apparatus, a predetermined frame including information indicating a period scheduled to perform a coordinated operation with the communication apparatus based on a timing to transmit a Beacon frame by the other communication apparatus functioning as an access point as a reference;
specifying the period based on the information; and
performing communication coordinately with the other communication apparatus in the period in a case where the coordinated operation with the other communication apparatus in the period is accepted.

17. A program configured to cause a computer provided in a communication apparatus functioning as an access point of the IEEE 802.11 standard to execute a communication method defined in claim 15 or 16.
